# EUROPÄISCHE PATENTSCHRIFT

(11) **EP 2 360 402 B1**
(45) Veröffentlichungstag und Bekanntmachung des Hinweises auf die Patenterteilung: **03.10.2012**
(21) Anmeldenummer: 11166605.3
(22) Anmeldetag: 20.05.2008
(51) Int. Cl.: F16K 5/06, F16K 27/06

(54) **Kunststoff-Ventilkugel**
Valve ball made of plastics
Bille de soupape en plastique

(30) Priorität: 24.05.2007 DE 102007024623; 24.05.2007 DE 102007024624; 24.05.2007 DE 102007024625
(43) Veröffentlichungstag der Anmeldung: 24.08.2011
(62) Teilanmeldung aus: 08750348.8
(73) Patentinhaber: Tappe, Michael, 40589 Düsseldorf (DE); Bersch, Andreas, 64397 Modautal (DE)
(72) Erfinder: Tappe, Michael, 40589 Düsseldorf (DE)
(74) Vertreter: Moser & Götze

(56) Entgegenhaltungen:
- WO-A-00/11381
- WO-A2-2005/040544
- DE-A1- 2 513 928
- DE-A1- 2 711 023
- US-A- 3 227 174
- US-A1- 2003 111 113

## Beschreibung

Die Erfindung betrifft eine Kunststoff-Ventilkugel für ein Kugelventil gemäß den im Oberbegriff von Anspruch 1 definierten Merkmalen.

Eine derartige Ventilkugel ist aus WO-A-00/11381 bekannt.

Aus dem europäischen Patent EP 0 575 643 B1 ist ein Kugelventil aus Kunststoff sowie ein Verfahren zu dessen Herstellung bekannt. Das Kugelventil besteht im Wesentlichen aus einem Gehäuse, in dem eine Ventilkugel als Absperrelement gelagert ist. Das Gehäuse weist zwei Rohranschlussstutzen auf, die in üblicher Weise in einer Offenstellung der Ventilkugel über deren Durchgangsbohrung miteinander verbunden sind und in einer Schließstellung über die Ventilkugel voneinander getrennt sind. Das Gehäuse ist einstückig im Spritzgussverfahren und aus Polyäthylen hergestellt. Um aus der Offenstellung in die Schließstellung verdreht werden zu können, ist die Ventilkugel um eine im Wesentlichen - bei horizontal ausgerichteten Rohranschlussstutzen gesehen - vertikale Achse drehbar gelagert und mit einer Schaltwelle zur Betätigung der Ventilkugel verbunden. Die Ventilkugel ist nicht direkt in dem Gehäuse gelagert, sondern über zwei Lagerringe, die über eine ringförmige Einlage miteinander verbunden sind. Die Lagerringe weisen mit dem Innenquerschnitt der Rohranschlussstutzen übereinstimmende Öffnungen auf und grenzen in Durchflussrichtung eines Fluids durch das Kugelventil gesehen vorne und hinten an die Ventilkugel an. In der Offenstellung der Ventilkugel fluchtet deren Durchgangsbohrung mit den Öffnungen der Lagerringe. Im Querschnitt gesehen sind die Lagerringe im Wesentlichen dreiecksförmig ausgebildet und überragen somit einen Teil der Außenumfangsfläche der Ventilkugel. In diesem die Ventilkugel überragenden Bereich ist in den Lagerringen jeweils ein Dichtring vorgesehen, der sich auf der Außenumfangsfläche der Ventilkugel abstützt. Als Material für die Dichtringe ist vorzugsweise Nitrilbutyl-Kautschuk vorgesehen. Der der Ventilkugel abgewandte und in Radialrichtung gerichtete Außenumfangsbereich der Lagerringe ist gerippt ausgebildet, wobei die Rippen sich parallel zur Durchflussrichtung des Kugelventils erstrecken. Die äußeren Enden der Rippen der beiden Lagerringe sind über ringförmige Einlage miteinander verbunden. Im vorliegenden Fall ist die ringförmige Einlage mit den Lagerringen verklebt oder verschweißt. Die beiden Lagerringe mit den Dichtringen und die Einlage bilden somit eine Art Tragkäfig für die Ventilkugel. Die Lagerringe, die Ventilkugel und die Einlage können aus Rotguss, Messing, Edelstahl oder Kunststoff, vorzugsweise glasfaserverstärktem Kunststoff oder Polypropylen, hergestellt sein. Zusätzlich sind in der ringförmigen Einlage Durchtrittsöffnungen vorgesehen, damit während des Herstellungsprozesses der eingespritzte Kunststoff des Gehäuses durch die Durchtrittsöffnungen in Richtung der Ventilkugel und in Richtung der Rippen eindringen kann. Der Gehäusekunststoff dringt hierbei bis auf die Oberfläche der Ventilkugel vor. Hierdurch wird ein inniger Verbund zwischen dem Material des Gehäuses und der Lagerringe sowie der Einlage in Form einer Einbettung geschaffen. Die Einlage hat die Aufgabe, nach Art einer Bewehrung die Zug-, Druck- und Bewegungskräfte sowie auftretende Drehmomente innerhalb des Kugelventils aufzunehmen.

Für die Herstellung des Kugelventils werden in einem der ersten Arbeitsschritte die Lagerringe mit den Dichtringen auf die gegenüberliegenden Enden der Ventilkugel aufgesetzt. Anschließend wird die ringförmige Einlage über die beiden Lagerringe geschoben. Dann wird über einen Klebe- oder Schweißvorgang die ringförmige Einlage an deren Enden mit den beiden Lagerringen verbunden. Dieser aus der Ventilkugel, den Lagerringen und der Einlage bestehende Tragkäfig wird nun in eine Spritzgussform eingelegt und anschließend von dem Gehäusewerkstoff umspritzt und durchdringen. Bei diesem Spritzvorgang haben die Durchtrittsöffnungen der Einlage die Aufgabe, das während des Spritzgießvorgangs entstehende Gehäuse in ein Außen- und ein Innenteil zu trennen. Bei der Abkühlung des in der Spritzform erzeugten Gehäuses wird ein Schrumpfvorgang der beiden Gehäuseteile relativ zueinander erzwungen und ein Schrumpfen des Gehäuses radial nach innen verhindert. Hierdurch soll ein Klemmen der Ventilkugel im Gehäuse vermieden werden. Um ein Spiel zwischen der Ventilkugel und dem Kunststoffgehäuse zu erhalten, wird vor dem Spritzen des Gehäuses die Ventilkugel erwärmt.

Des Weiteren ist aus dem europäischen Patent EP 1 121 549 B1 ein weiteres Absperrventil aus Kunststoff sowie ein Verfahren zu dessen Herstellung bekannt. Dieses Absperrventil stimmt im grundsätzlichen Aufbau abgesehen von der Einlage, die die beiden Lagerringe miteinander verbindet, mit dem vorbeschriebenen Kugelventil überein. Nach diesem Patent wird die Einlage in zwei Schritten als Spritzteil hergestellt. In einem ersten Schritt wird ein Formteil hergestellt, das vorzugsweise aus einem thermoplastischen Kunststoff, insbesondere einem Adhäsions-Copolymer besteht, gespritzt. Dieses Formteil bildet die Außenform der Einlage und somit auch die Innenform des später aus Polyäthylen aufgespritzten Gehäuses. In einem zweiten Herstellungsschritt wird von innen auf das Formteil ein Kunststoff, vorzugsweise ein glasfaserverstärktem Kunststoff oder Polypropylen, aufgespritzt. Beim Aufspritzen dieses Kunststoffes auf das Formteil schmilzt dieses teilweise auf und es bildet sich eine Schmelzschweißverbindung zwischen dem Formteil und dem in dem zweiten Verfahrensschritt eingebrachten Kunststoff. Die Einlage besteht somit aus einer ersten äußeren Schicht aus thermoplastischen Kunststoff, insbesondere einem Adhäsions-Copolymer, und einer zweiten inneren Schicht aus einem Kunststoff, vorzugsweise einem glasfaserverstärktem Kunststoff oder Polypropylen. Auch weist diese Einlage die vorbeschriebenen Durchtrittsöffnungen auf, damit bei dem letzten Herstellungsschritt des Absperrventils das eingespritzte Polyäthylen für das Gehäuse durch die Durchtrittsöffnungen der Einlage hindurch bis auf die Ventilkugel treten kann und somit die Einlage in den Gehäusewerkstoff eingebettet ist.

Des Weiteren ist aus der europäischen Patentschrift EP 0 756 681 B1 ein Kugelhahn mit einer Ventilkugel und mit einem zweiteiligen Gehäuse bekannt. Das Gehäuse ist mittig und in Durchflussrichtung gesehen quer in einer Ebene geteilt, die zentral eine Stellachse der Ventilkugel schneidet. Die Gehäusehälften weisen eine Aussparung für die Aufnahme eines Kugelhahneinsatzes auf. Der Kugelhahneinsatz wird während der Montage in das zweiteilige Gehäuse eingesetzt und die beiden Gehäusehälften mittels Schrauben miteinander verspannt. Da der Kugelhahneinsatz gegenüber der Aussparung in dem Gehäuse ein Übermaß aufweist, erfolgt die Abdichtung über die erzielte Vorspannung. Dieser Kugelhahneinsatz besteht im Wesentlichen aus der Ventilkugel mit einer Schaltwelle und einem gegenüberliegenden Lagerzapfen, die insgesamt von einer nahtlosen Auskleidung umgeben sind, die in Durchflussrichtung gesehen vorne und hinten einen Flansch aufweist. Da die Auskleidung des Kugelhahneinsatzes von Flansch zu Flansch nahtlos und durchgehend ist sowie aus einem Fluorkunststoff wie PFA, PTFE oder FEP hergestellt ist, haben die weiteren Teile des Kugelhahneinsatzes keinen Mediumkontakt und brauchen nicht aus so hochwertigen Werkstoffen hergestellt werden. Für eine Demontage der Ventilkugel ist die Auskleidung zu teilen und somit zu zerstören. Die Ventilkugel ist innerhalb der Auskleidung drehbar und liegt an der Oberfläche der Ventilkugel und teilweise am Lagerzapfen und der Schaltwelle an. An der der Ventilkugel abgewandten Außenseite der Auskleidung ist eine elastische Einlage angeordnet, die von einem weiteren Gehäusekörper des Kugelhahneinsatzes umgriffen wird. Die elastische Einlage hat die Aufgabe die Auskleidung gegenüber dem Gehäusekörper abzudichten. Der Gehäusekörper kann aus Metall oder Kunststoff hergestellt werden und ist dann für die Montage hälftig geteilt. Auch kann der Gehäusekörper ungeteilt aus gespritztem Kunststoff hergestellt werden. Die Verarbeitungstemperatur des Kunststoffs des Gehäusekörpers muss dann unter der der Auskleidung und der elastische Einlage liegen. Zusätzlich sind die Auskleidung und der Gehäusekörper mechanisch, formschlüssig oder über eine Verklebung mittels eines Haftvermittlers verbunden. Um den Kugelhahneinsatz im Bereich der Schaltwelle abzudichten, weist der Kugelhahneinsatz zusätzlich ein Druckstück auf, das auf der elastischen Einlage ruht und von einem hülsenförmigen und die Schaltwelle konzentrisch umgebenden Druckflansch in Richtung der Auskleidung soweit vorgespannt wird, bis die gewünschte Dichtigkeit erreicht wird.

Ausgehend von diesem Stand der Technik liegt der vorliegenden Erfindung die Aufgabe zugrunde, eine Kunststoff-Ventilkugel für ein Kugelventil zu schaffen, die sich durch eine verbesserte Formstabilität und gute Beständigkeit gegen Medien auszeichnet.

Diese Aufgabe wird durch eine Kunststoff-Ventilkugel für ein Kugelventil mit den Merkmalen des Anspruchs 1 gelöst. Vorteilhafte Ausgestaltungen der Erfindung sind in den Ansprüchen 2 bis 7 beschrieben.

Erfindungsgemäß wird bei einer Kunststoff-Ventilkugel eines Kugelventils, die eine Durchgangsöffnung aufweist und in einem Gehäuse des Kugelventils zwischen einer Offen- und einer Schließstellung drehbar lagerbar ist, eine verbesserte Formstabilität dadurch erreicht, dass die Ventilkugel nach Art eines Verbundbauteils aus einem Tragelement und einer Deckschicht aufgebaut ist. Hierdurch können in der Ventilkugel die Eigenschaften hohe Formstabilität durch das Tragelement und gute Beständigkeit gegen Medien durch die Deckschicht vereint werden. Eine gute Formbeständigkeit führt dazu, dass die Ventilkugel auch unter hohen Betriebsdrücken sich nur gering verformt und somit auch dann noch gut innerhalb des Gehäuses des Kugelventils aus der Schließstellung in die Offenstellung verdreht werden kann, ohne hohe Losbrechmomente in Bezug auf die Ventilkugel überwinden zu müssen. Auch ist das erforderliche Drehmoment über den Verstellbereich der Ventilkugel gleichbleibend. Die Verbundbauweise der Ventilkugel führt zu deren Leichtbau, einer Gewichtsersparnis und einer Materialeinsparung. Auch Ventilkugeln mit großem Durchmesser können gespritzt werden. Es muss keine Herstellung aus extrudiertem Halbzeug erfolgen.

Um die gute Beständigkeit gegen Medien zu erreichen, ist erfindungsgemäß vorgesehen, dass die Deckschicht das Tragelement vollständig umgibt.

Außerdem können die Deckschichten vorteilhafter Weise an die Anforderungen des Mediums einfach angepasst werden. Erfindungsgemäß ist vorgesehen, dass das Tragelement aus einem wärmefesten technischen Hochleistungskunststoff, insbesondere glasfaserverstärktem Polyamid, und die Deckschicht aus einem Medium resistenten Kunststoff, insbesondere Fluorkunststoff, Polyäthylen, Polyoxymethylen, Elastomer oder synthetische Duroplaste wie Gummi, hergestellt sind. Bevorzugt sind die mit der Deckschicht in Verbindung stehenden Flächen des Tragelements mit einer Verbindungsschicht als Haftvermittler beschichtet. Dadurch dass das Traggerüst aus einem technischen Hochleistungskunststoff hergestellt ist und auch die Ventilkugel sehr formbeständig ist, wird einerseits die Dichtigkeit der Kugelventils erhöht und andererseits weder die Tragstruktur noch die Ventilkugel auch unter hohen Drücken nennenswert verformt, so dass eine Leichtgängigkeit der Ventilkugel in der Tragstruktur erhalten bleibt und somit keine hohen Losbrechmomente für den Schaltvorgang des Kugelventils benötigt werden.

Eine Leichtbauweise der Ventilkugel wird dadurch erreicht, dass das Tragelement mindestens einen eingeschlossenen Hohlraum aufweist.

Um eine gute Führung und leichte Verstellbarkeit der Ventilkugel zu ereichen, ist an einem Ende ein nach außen hervor ragender Zapfen angeordnet und an dem gegenüberliegende Ende der Ventilkugel eine Aussparung zur Aufnahme einer Stellachse.

Besonders günstig ist vorgesehen, dass ein Hohlraum im Bereich des Zapfens angeordnet ist.

Nachfolgend wird die Erfindung anhand eines in einer Zeichnung dargestellten Ausführungsbeispiels näher erläutert. Es zeigen:
Figur 1 einen Längsschnitt durch ein Kugelventil,
Figur 2 eine Detailansicht eines Ventilkörpers des Kugelventils nach Figur 1,
Figur 3 eine Seitenansicht von Figur 2.

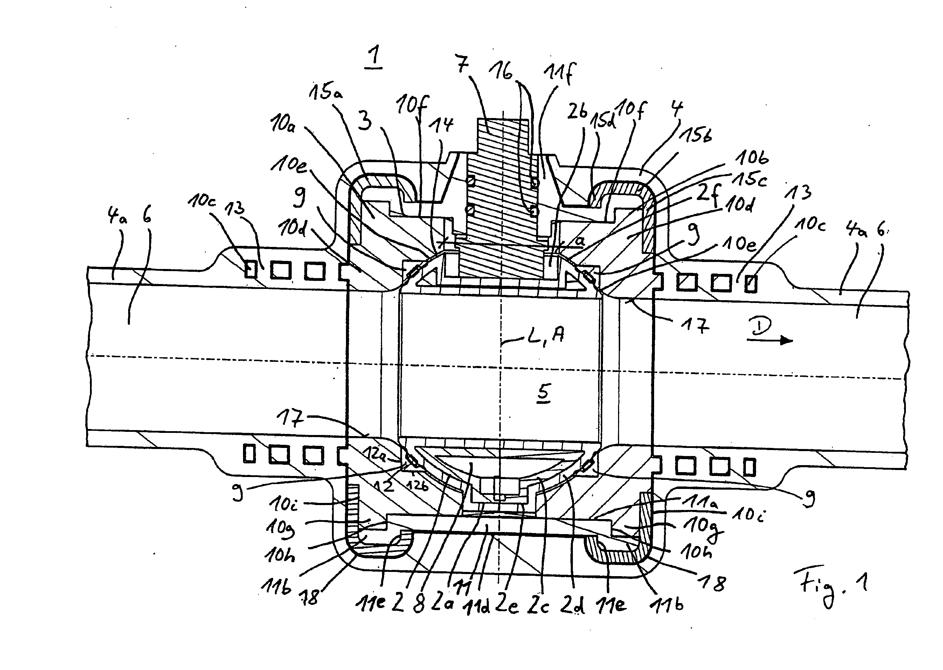

Die Figur 1 zeigt einen Längsschnitt durch ein Kugelventil 1 nach der vorliegenden Erfindung. Von innen nach außen gesehen besteht das Kugelventil 1 im Wesentlichen aus einer Ventilkugel 2, einer Tragstruktur 3 und einem Gehäuse 4.

Die Ventilkugel 2, die in dem Kugelventil 1 als Absperrelement dient, weist in üblicher Weise zentral eine zylinderförmige Durchgangsöffnung 5 auf. In der Figur 1 ist die Ventilkugel 2 in ihrer Offenstellung dargestellt, in der die Durchgangsöffnung 5 zwei fluchtende und einander gegenüberliegende Anschlussstutzen 4a, die Bestandteil des Gehäuses 4 sind, miteinander verbindet, so dass ein Fluid durch das Kugelventil 1 hindurch strömen kann. Um die Ventilkugel 2 aus ihrer Offenstellung in ihre Schließstellung bewegen zu können, ist diese in der Tragstruktur 3 um eine im vorliegenden Fall vertikale Achse A drehbar gelagert. Hierfür weist die Ventilkugel 2 im Bereich ihres unteren Endes einen kreisrunden Zapfen 2a auf, dessen Längsachse L parallel zur Achse A verläuft. Auch verläuft die Längsachse L des Zapfens 2a rechtwinklig zur Durchflussrichtung D der Durchgangsöffnung 5. An dem dem Zapfen 2a gegenüberliegenden oberen Ende der Ventilkugel 2 ist eine Aussparung 2b vorgesehen, in die formschlüssig eine Stellachse 7 eingreift. Über diese Stellachse 7 kann von außen die Ventilkugel 2 aus ihrer Offenstellung in ihre Schließstellung oder umgekehrt bewegt werden. Die formschlüssige Verbindung zwischen der Stellachse 7 und der Aussparung 2b kann beispielsweise als Vieleck oder Torx-Verbindung sowie auch einfach als Schlitz mit rechteckigem Querschnitt ausgebildet sein.

Die Ventilkugel 2 an sich ist in einer Hybrid- beziehungsweise Verbund-Bauweise hergestellt. Im Inneren der Ventilkugel 2, die durch die Durchgangsöffnung 5 bedingt im wesentlichen hülsenförmig ist, befindet sich ein Tragelement 2c, das aus einem wärmefesten technischen Hochleistungskunststoff, wie beispielsweise glasfaserverstärktem Polyamid, hergestellt ist. Um eine Leichtbauweise der Ventilkugel 2 zu erreichen, weist dieses Tragelement 2c soweit möglich umschlossene Hohlräume 8 auf, wie sie beispielsweise in der Figur im Bereich des Zapfens 2a dargestellt sind. Dieses Tragelement 2c wird in einem Spritzgussverfahren mit einem medienbeständigen Kunststoff in Form einer Deckschicht 2d umhüllt, um die endgültige Form der Ventilkugel 2 zu erreichen. Als Kunststoffe für die Deckschicht 2d kommen Fluorkunststoffe, Polyäthylen, Polyoxymethylen (POM) oder Elastomere in Frage. Vor dem Aufspritzen der Deckschicht 2d wird die Oberfläche des Tragelements 2c mit einem Haftvermittler 2e beziehungsweise Primer in Form einer Verbindungsschicht vorbereitet. Der Haftvermittler 2e kann auch ein gespritztes Copolymer sein. Die Deckschicht 2d umschließt das Tragelement 2c vollständig, so dass das Tragelement 2c nicht in Kontakt mit dem Medium beziehungsweise Fluid kommt, das durch die Rohrleitungen und somit durch das Kugelventil 1 geführt wird. Eine Verbindung ohne den Haftvermittler 2e ist auch möglich. Die Deckschicht 2d weist etwa eine Dicke von 5 bis 25mm, vorzugsweise 8 bis 10mm, auf und kann spanend oder in anderer geeigneter Weise bearbeitet werden, um die gewünschte beziehungsweise erforderliche Rundheit der Ventilkugel 2 zu erreichen. Die derart ausgebildete Ventilkugel 2 zeichnet sich durch ein geringes Einsatzgewicht, eine hohe Beständigkeit gegen aggressive Medien und hohe Formstabilität aus. Durch die hohe Formstabilität wird vermieden, dass auch bei hohem, im geschlossenen Zustand an den Ventilkugel 2 anstehendem Drücken, durch eine Verformung der Ventilkugel 2 hervorgerufene Losbrechmomente das Öffnen des Kugelventils 1 erschweren.

Die zuvor beschriebene Ventilkugel 2 ist in der Tragstruktur 3 um die Achse A drehend gelagert und über ein Dichtelement 9 gegenüber der Tragstruktur 3 abgedichtet. Die Tragstruktur 3 ist aus mehreren Bauteilen aufgebaut und zwar einem ersten Tragring 10a, einem hülsenförmigen Verbindungselement 11 und einem zweiten Tragring 10b. Der erste Tragring 10a, das Verbindungselement 11 und der zweite Tragring 10b sind in Durchflussrichtung D gesehen hintereinander angeordnet. Mit anderen Worten ausgedrückt verbindet das Verbindungselement 11 den ersten Tragring 10a mit dem hiervon beabstandeten zweiten Tragring 10b, um die die Ventilkugel 2 umschließende Tragstruktur 3 auszubilden. Jeder der beiden Tragringe 10a und 10b weisen ein Anschlussteil 10c auf, das jeweils von dem Kunststoff des Anschlussstutzens 4a des Gehäuses 4 umschlossen ist, und einem Tragteil 10d, die jeweils die Ventilkugel 2 von gegenüberliegenden Enden im Bereich ihrer in Durchflussrichtung D gesehen vorderen und hinteren Enden ringförmig umschließen. Auch weisen die Tragteile 10d jeweils an ihrer der Ventilkugel 2 zugewandten Seite eine Kreisbogenfläche 10e auf, die der Dichtfläche 2f der äußeren Oberfläche der Ventilkugel 2 folgt. Außerdem sind die Tragringe 10a und 10b in dem Bereich ihres Anschlussteils 10c gitterartig mit Öffnungen 13 versehen, damit der im Spritzgussverfahren eingebrachte Kunststoff des Gehäuses 4 das Anschlussteil 10c durchdringen kann und somit bei Ausbildung des Anschlussstutzens 4a dieser einen innigen Verbund mit dem Anschlussteil 10c der Tragringe 10a und 10b erhält.

Des Weiteren ist in jedem der Tragringe 10a und 10b, im Bereich ihrer der Ventilkugel 2 zugewandten Kreisbogenfläche 10e, eine Ausnehmung 12 vorgesehen, die im Querschnitt gesehen dreieckförmig ausgebildet ist, wobei die ringförmige Ausnehmung 12 zwei rechtwinklig zueinander ausgerichtete Anlageflächen 12a und 12b für das Dichtelement 9 aufweisen, die jeweils parallel zur Durchflussrichtung D und senkrecht hierzu ausgerichtet sind. In dieser Ausnehmung 12 ist das Dichtelement 9 aufgenommen, das den ersten Tragring 10a bzw. den zweiten Tragring 10b gegenüber der Dichtfläche 2f der Ventilkugel 2 abdichtet.

Insgesamt gesehen weist jeder der beiden Tragringe 10a und 10b eine rohrförmige Gestalt auf, die im Bereich des jeweiligen Anschlussteils 10c zylinderförmig und gitterartig ausgebildet ist und in dem anschließenden Tragteil 10d eine vergrößerte Wanddicke aufweist zur Aufnahme der im Betrieb auf die Ventilkugel 2 auftretenden Kräfte und sich in Richtung der Ventilkugel 2 mit seiner Kreisbogenfläche 10e erweitert. Es ist ersichtlich, dass hierdurch zwischen der Dichtfläche 2f der Ventilkugel 2 und der Kreisbogenfläche 10e der Tragringe 10a und 10b nur ein geringer Spalt 14 verbleibt und somit das Kugelventil 1 insgesamt nur einen geringen Totraum aufweist, falls Medien über das Dichtelement 9 hinaus in Richtung der Ventilkugel 2 beziehungsweise der Stellachse 7 durchdringen sollten. Der Spalt 14 weist eine Breite von 1/10mm bis 5/10mm auf.

Auf der dem Ventilkörper 2 abgewandten Außenseite 10f sind der erste Tragring 10a und der zweite Tragring 10b im Wesentlichen zylinderförmig ausgebildet. Jedoch ist an dieser Außenseite 10f, die der Ventilkugel 2 abgewandt ist, an jedem der Tragringe 10a und 10b ein treppenartig sich nach außen erstreckender Ansatz 10g vorgesehen, der somit eine im Wesentlichen vertikal zur Durchflussrichtung D ausgerichtete Anlagefläche 10h ausbildet. Der erste Tragring 10a und der zweite Tragring 10b sind zur Ausbildung der Tragstruktur 3 jeweils von den Enden in das im Wesentlichen hülsenförmige und eine zylindrische Innenseite 11a aufweisende Verbindungselement 11 eingeschoben. Auch das Verbindungselement 11 weist an seinen beiden gegenüberliegenden Enden an seiner Innenfläche 11a eine nach außen gerichtete treppenartige Erweiterung 11 b auf, die eine im Wesentlichen senkrecht zur Durchflussrichtung D ausgerichtete Anlagefläche 11c ausbildet. Der Abstand a zwischen den beiden Anlageflächen 11c bestimmt somit den Abstand der beiden in das Verbindungselement 11 eingeschobenen Tragringe 10a und 10b und somit im Endeffekt die Größe des zwischen den Kreisbogenflächen 10e und der Dichtfläche 2f des Ventilkörpers 2 verbleibenden Spaltes 14 sowie der Vorspannung des Dichtelements 9 beim Einspannen der Ventilkugel 2 in die Tragstruktur 3.

Um den ersten Tragring 10a und den zweiten Tragring 10b jeweils in den gegenüberliegenden Enden des Verbindungselementes 11 zu halten, sind zwei Halteteile 15a, 15b vorgesehen, die im Querschnitt gesehen u-förmig und mit einem langen Schenkel 15c und einem kurzen Schenkel 15d ausgebildet sind. Im eingebauten Zustand des Halteteils 15a, 15b liegt der lange Schenkel 15c jeweils an einer dem Dichtelement 9 gegenüberliegenden Haltefläche 10i an, die rechtwinklig zur Durchflussrichtung D des Kugelventils 1 ausgerichtet ist und bündig mit einer Außenfläche 11d des Verbindungselementes 11 abschließt. Der kurze Schenkel 15d des Halteteils 15a, 15b liegt an einer Gegenfläche 11e des Verbindungselementes 11 an. Diese Gegenfläche 11e ist ebenfalls rechtwinklig zur Durchflussrichtung D des Kugelventils 1 ausgerichtet. Das klammerartige Halteteil 15a, 15b hat somit die Aufgabe jeweils mit seinen langen Schenkeln 15c von außen den ersten Tragring 10a und den zweiten Tragring 10b soweit in die offenen Enden des Verbindungselementes 11 hinein zu drücken, bis deren Anlageflächen 10h an den Anlageflächen 11c des Verbindungselementes zur Anlage kommen. Um diese Haltekraft aufbringen zu können, stützt sich das Halteteil 15a, 15b mit seinem kurzen Schenkel 15d an einer Gegenfläche 11e des Verbindungselementes 11 ab.

Für die Montage der Halteteile 15a, 15b ist vorgesehen, diese zweiteilig auszugestalten und jeweils eines der beiden Enden gelenkig miteinander zu verbinden und das andere Ende über eine Art Rast- bzw. Schnappverbindung zu schließen. Neben dieser mechanischen Verklammerung der beiden Tragringe 10a und 10b über das Verbindungselement 11 mittels des Halteteils 15a, 15b ist vorgesehen, die Innenfläche 11a des Verbindungselementes 2a und die Außenseite 10f der beiden Tragringe 10a und 10b zusätzlich abzudichten oder miteinander zu verkleben.

Zusätzlich weist das Verbindungselement 11 in Durchflussrichtung D gesehen im Bereich seiner Mitte eine Hülse 11f auf, in der die Stellachse 7 drehend gelagert ist und über Dichtringe 16 abgedichtet ist. Diese Hülse 11f ist mit seiner Längserstreckung rechtwinklig zur Durchflussrichtung D ausgerichtet.

Die Tragstruktur 3, die im Wesentlichen aus dem ersten Tragring 10a, dem Verbindungselement 11, dem zweiten Tragring 10b und den beiden Haltelementen 15a, 15b gebildet ist, wird im Wesentlichen im Spritzgussverfahren aus sogenannten technischen Hochleistungskunststoffen hergestellt, die sich durch eine hohe Festigkeit und gleichzeitig eine Wärmefestigkeit auszeichnen. Beispielsweise sei hier glasfaserverstärktes Polyamid genannt. Im Falle der Verwendung von Polyamid sind die Bereiche der Flächen der Tragstruktur 3 mit einer Schutzschicht 17 überzogen, die mit dem Medium in den nicht dargestellten Rohrleitungen und somit in dem Kugelventil 1 in Verbindung kommen können. Als Schutzschicht 17 kann ein Haftvermittler oder vorzugsweise ein gespritztes Copolymer zum Einsatz kommen. Außerdem sind alle Flächen, vorzugsweise die äußeren Flächen der Tragstruktur 3 mit einem Haftvermittler 18 oder vorzugsweise einem gespritzten Copolymer als Verbindungsschicht umgeben, um einen innigen Verbund zwischen dem Kunststoff des Gehäuses 4 und der Tragstruktur 3 zu erreichen.

Der Haftvermittler 18 beginnt somit im Bereich der Außenseite der Hülse 11f und setzt sich im Bereich der Außenfläche 11 d des Verbindungselementes 11 fort, umschließt dann den kurzen Schenkel 15d des Halteteils 15a, 15b, geht dann über in den langen Schenkel 15c des Halteteils 15a, 15b und trifft dort auf das Anschlussteil 10c der Tragringe 10a und 10b.

Es ist ersichtlich, dass die Tragstruktur 3 und somit auch der Haftvermittler 18 die Ventilkugel 2 vollständig umgibt und keine Öffnungen bestehen, in denen Kunststoff des Gehäuses 4 beim Spritzgussvorgang in Richtung der Ventilkugel 2 dringen kann. Die Tragstruktur 3 und die Ventilkugel 2 bilden somit bereits ein dichtes und funktionsfähiges Kugelventil 1.

In dem letzten Herstellungsschritt des Kugelventils 1 wird die Tragstruktur 3 mit der Ventilkugel 2 und der Stellachse 7, die von dem Haftvermittler 18 umgeben sind, in eine Spritzgussform eingelegt und das Gehäuse 4 mit den durch Umspritzen der vorgenannten Teile mit einem Thermoplast, vorzugsweise Polyäthylen oder Polyvinylchlorid, oder Elastomere erstellt. Das Gehäuse 4 hat die Aufgabe die Tragstruktur 3 gegen mechanische und chemische Belastungen zu schützen, da die Hochleistungswerkstoffe der Tragstruktur 3 meistens nicht sehr resistent sind. Die Anschlussstutzen 4a weisen im vorliegenden Fall eine Öffnung 6 auf, deren Öffnungsquerschnitt dem der Durchgangsöffnung 5 der Ventilkugel 2 entspricht. Auch ermöglicht der verwendete Thermoplast im Bereich der Anschlussstutzen 4a die anzuschließenden und nicht dargestellten Rohrleitungen anzuschweißen, zu verpressen oder über die Außenoberflächen der Anschlussstutzen 4a einzuschneidende Gewinde anzuschließen.

Unter Haftvermittler beziehungsweise Primer werden dünne Schichten im µm-Bereich verstanden, die im Flammspritzverfahren, im Plasmaverfahren, im Wirbelsinterverfahren aus einem geeigneten Material, wie beispielsweise Kunststoffpulver, Kunststoffpulver als Emulsion in geeignetem Lösungsmittel, aufgebracht werden. Das Material des Haftvermittlers ist in der Regel aus Werkstoffen (Kunststoffen), die mit den zu verbindenden Werkstoffen kompatibel sind. Die Haftverbindung geschieht durch Effekte wie Adhäsion, Diffusion der Molekülstruktur und/oder Wasserstoffbrückenbildung.

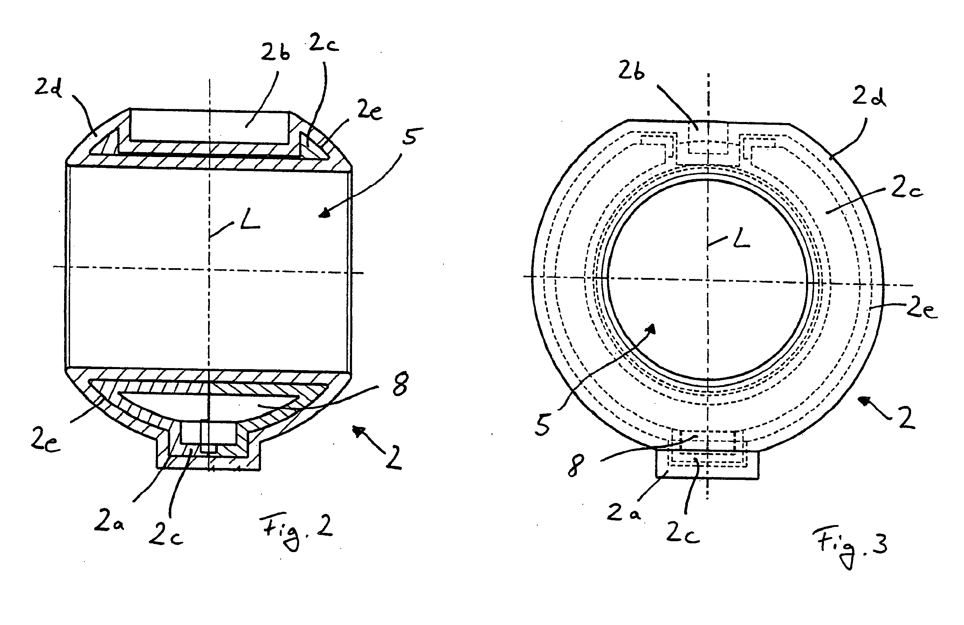

In der Figur 2 ist eine Detailansicht des Ventilkörpers 2 des Kugelventils nach Figur 1, aus der die zuvor beschriebene Aufteilung des Ventilkörpers 2 in ein Tragelement 2c, eine Verbindungsschicht 2e und eine Deckschicht 2d gut zu erkennen ist. Im Bereich des Ansatzes 2a wird durch das gerüstartige Tragelement 2c eine ausreichende Stabilität erreicht, so dass über eine Hohlraum 8 innerhalb des Tragelements 2c zusätzlich eine Gewichtsersparnis erreicht werden kann.

Die Figur 3 zeigt eine Seitenansicht von Figur 2.

### Bezugszeichenliste

- 1: Kugelventil
- 2: Ventilkugel
- 2a: Zapfen
- 2b: Aussparung
- 2c: Tragelement
- 2d: Deckschicht
- 2e: Haftvermittler
- 2f: Dichtfläche
- 3: Tragstruktur
- 4: Gehäuse
- 4a: Anschlussstutzen
- 5: Durchgangsöffnung
- 6: Öffnung
- 7: Stellachse
- 8: Hohlraum
- 9: Dichtelement
- 10a: erster Tragring
- 10b: zweiter Tragring
- 10c: Anschlussteil
- 10d: Tragteil
- 10e: Kreisbogenfläche
- 10f: Außenseite
- 10g: Ansatz
- 10h: Anlagefläche
- 10i: Haltefläche
- 11: Verbindungselement
- 11a: Innenfläche
- 11b: Erweiterung
- 11c: Anlagefläche
- 11d: Außenfläche
- 11e: Gegenfläche
- 11f: Hülse
- 12: Aussparung
- 12a: Anlagefläche
- 12b: Anlagefläche
- 13: Öffnungen
- 14: Spalt
- 15a: erstes Halteteil
- 15b: zweites Halteteil
- 15c: langer Schenkel
- 15d: kurzer Schenkel
- 16: Dichtringe
- 17: Schutzschicht
- 18: Haftvermittler

- a: Abstand
- A: Achse
- D: Durchflussrichtung
- L: Längsachse

## Patentansprüche

1. Kunststoff-Ventilkugel für ein Kugelventil (1), die eine Durchgangsöffnung (5) aufweist und in einem Gehäuse (4) des Kugelventils (1) zwischen einer Offen- und einer Schließstellung drehbar lagerbar ist, wobei die Ventilkugel (2) nach Art eines Verbundbauteils aus einem Tragelement (2c) und einer Deckschicht (2d) aufgebaut ist, **dadurch gekennzeichnet, dass** die Deckschicht (2d) das Tragelement (2c) vollständig umgibt, das Tragelement (2c) aus einem wärmefesten technischen Hochleistungskunststoff, insbesondere glasfaserverstärktem Polyamid, und die Deckschicht (2d) aus einem Medium resistenten Kunststoff, insbesondere Fluorkunststoff, Polyäthylen, Polyoxymethylen, Elastomer oder synthetische Duroplaste wie Gummi, hergestellt sind.

2. Ventilkugel nach Anspruch 1, **dadurch gekennzeichnet, dass** das Tragelement (2c) von der Deckschicht (2d) umspritzt ist.

3. Ventilkugel nach Anspruch 1 oder 2, **dadurch gekennzeichnet, dass** die mit der Deckschicht (2d) in Verbindung stehenden Flächen des Tragelements (2c) mit einer Verbindungsschicht (2c) als Haftvermittler beschichtet sind.

4. Ventilkugel nach einem der Ansprüche 1 bis 3, **dadurch gekennzeichnet, dass** das Tragelement (2c) mindestens einen eingeschlossenen Hohlraum (8) aufweist.

5. Ventilkugel nach einem der Ansprüche 1 bis 4, **dadurch gekennzeichnet, dass** an einem Ende ein nach außen hervor ragender Zapfen (2a) angeordnet ist und an dem gegenüberliegenden Ende der Ventilkugel (2) eine Aussparung (2b) zur Aufnahme einer Stellachse (7).

6. Ventilkugel nach Anspruch 4 und 5, **dadurch gekennzeichnet, dass** ein Hohlraum (8) im Bereich des Zapfens (2a) angeordnet ist.

7. Ventilkugel nach einem der Ansprüche 1 bis 6, **dadurch gekennzeichnet, dass** die Deckschicht (2d) eine Dicke von 5 bis 25 mm, vorzugsweise 8 bis 10mm, aufweist.

## Claims

1. Plastic valve ball for a ball valve (1), exhibiting a passage aperture (5) and rotatably mounted in a housing (4) of the ball valve (1) between an open and a closed position, wherein the valve ball (2) is designed in the manner of a composite component, of a carrier element (2c) and a cover layer (2d), **characterised in that** the cover layer (2d) surrounds the carrier element (2c) entirely, the carrier element (2c) is manufactured from a heat-resistant technical high-performance plastic, in particular a glass fibre-reinforced polyamide, and the cover layer (2d) is manufactured from a medium-resistant plastic, in particular fluoroplastic, polyethylene, polyoxymethylene, elastomer, or synthetic thermoset, such as rubber.

2. Valve ball according to Claim 1, **characterised in that** the carrier element (2c) is encapsulated by the carrier layer (2d).

3. Valve ball according to Claim 1 or 2, **characterised in that** the surfaces of the carrier element (2c) in contact with the cover layer (2d) are coated with a connection layer (2c) as a bonding agent.

4. Valve ball according to one of Claims 1 to 3, **characterised in that** the carrier element (2c) exhibits at least one enclosed cavity (8).

5. Valve ball according to one of Claims 1 to 4, **characterised in that** a journal (2a) projecting outwards is arranged at one end of the valve ball (2), and that a cut-out aperture (2b) for accommodating an adjustment axle (7) is arranged at the opposite end.

6. Valve ball according to Claim 4 and 5, **characterised in that** a cavity (8) is arranged in the area of the journal (2a).

7. Valve ball according to one of Claims 1 to 6, **characterised in that** the cover layer (2d) exhibits a thickness of 5 to 25 mm, for preference 8 to 10 mm.

## Revendications

1. Bille de soupape en matière plastique pour soupape à bille (1), laquelle bille de soupape comporte une ouverture de passage (5) et est logée de façon à pouvoir tourner dans un boîtier (4) de la soupape à bille (1) entre une position d'ouverture et une position de fermeture, la bille de soupape (2) étant structurée à la manière d'un composant composite constitué d'un élément de support (2c) et d'une couche de revêtement (2d), **caractérisée en ce que** la couche de revêtement (2d) entoure complètement l'élément de support (2c), **en ce que** l'élément de support (2c) est fabriqué à partir d'une matière plastique à haute performance technique résistante à la chaleur, notamment du polyamide renforcé par des fibres de verre, et **en ce que** la couche de revêtement (2d) est fabriquée à partir d'une matière plastique résistante aux fluides, notamment d'une matière plastique fluorée, de polyéthylène, de polyoxyméthylène, d'élastomère ou d'un duroplaste tel que du caoutchouc.

2. Bille de soupape selon la revendication 1, **caractérisée en ce que** l'élément de support (2c) est entouré de la couche de revêtement (2d) par extrusion.

3. Bille de soupape selon la revendication 1 ou 2, **caractérisée en ce que** les faces de l'élément de support (2c) qui sont en liaison avec la couche de revêtement (2d) sont recouvertes d'une couche de liaison (2c) tel qu'un agent adhésif.

4. Bille de soupape selon l'une des revendications 1 à 3, **caractérisée en ce que** l'élément de support (2c) comporte au moins un vide en inclusion (8).

5. Bille de soupape selon l'une des revendications 1 à 4, **caractérisée en ce qu'**une cheville (2a) saillant vers l'extérieur est disposée à une extrémité et un évidement (2b) destiné à recevoir un axe d'ajustage (7) est ménagé à l'extrémité opposée de la bille de soupape (2).

6. Bille de soupape selon les revendications 4 et 5, **caractérisée en ce qu'**un vide (8) est ménagé dans la région de la cheville (2a).

7. Bille de soupape selon l'une des revendications 1 à 6, **caractérisée en ce que** la couche de revêtement (2d) a une épaisseur de 5 à 25 mm, de préférence de 8 à 10 mm.
